# EUROPÄISCHE PATENTSCHRIFT

(11) **EP 3 878 648 B1**
(45) Veröffentlichungstag und Bekanntmachung des Hinweises auf die Patenterteilung: **20.04.2022**
(21) Anmeldenummer: 20162393.1
(22) Anmeldetag: 11.03.2020
(51) Int. Cl.: B32B 21/08, B27N 7/00, B44C 5/04, E04F 15/02, B05D 7/06, B27M 3/04, B32B 21/00, B32B 21/02, B32B 38/00, B32B 7/12, B32B 27/12, B32B 27/40, B32B 33/00, B32B 3/10, B32B 5/02, B32B 27/06

(54) **VERBUNDMATERIAL MIT EINER THERMOPLASTISCHEN FOLIE ZUR VERWENDUNG IN EINEM FUSSBODENPANEEL UND EIN VERFAHREN ZU DESSEN HERSTELLUNG**
COMPOSITE MATERIAL WITH A THERMOPLASTIC FILM FOR USE IN A FLOOR PANEL AND A METHOD FOR ITS MANUFACTURE
MATÉRIAU COMPOSITE DOTÉ D'UN FILM THERMOPLASTIQUE DESTINÉ À ÊTRE UTILISÉ DANS UN PANNEAU DE PLANCHER ET SON PROCÉDÉ DE FABRICATION

(43) Veröffentlichungstag der Anmeldung: 15.09.2021
(73) Patentinhaber: Flooring Technologies Ltd., Kalkara SCM1001 (MT)
(72) Erfinder: Dr. Kalwa, Norbert, 32805 Horn-Bad Meinberg (DE); Seidack, Georg, 16835 Herzberg (Mark) (DE)
(74) Vertreter: Maikowski & Ninnemann Patentanwälte Partnerschaft mbB

(56) Entgegenhaltungen:
- US-A1- 2013 029 115
- DATABASE WPI Week 201783 Thomson Scientific, London, GB; AN 2017-65748U XP002799902, & CN 107 165 376 A (DAKUAI BUILDING MATERIALS DEV JIANGSU CO) 15. September 2017 (2017-09-15)

## Beschreibung

Die vorliegende Erfindung betrifft ein Verbundmaterial zur Verwendung in einem Fußbodenpaneel, insbesondere ein Holzwerkstoffpaneel oder einem Laminat, und Verfahren zu dessen Herstellung.

### Beschreibung

Bei den weltweit verkauften Bodenbelägen hat sich der Laminatboden in den letzten Jahrzehnten einen nicht unerheblichen Marktanteil erobert. Dies erfolgte, weil der Laminatboden gute mechanische Oberflächeneigenschaften mit gefälligen Dekoren und dazu passenden Oberflächenstrukturierungen kombinierte.

Die Laminatböden werden üblicherweise aus einem Holzwerkstoffträger (meist einer Holzfaserplatte) und einer dekorativen Melaminbeschichtung auf der Oberseite und einem Gegenzug auf der Unterseite hergestellt. Durch die einfache und schnelle Verlegung auf Grund der leimlosen Profile, die an die Laminatbodenelemente angefräst sind, ist eine erhebliche Zeit- und Kostenersparnis möglich.

Dieser Marktanteil ist allerdings in den letzten Jahren, insbesondere in Mitteleuropa geschrumpft. Die Gründe für diese Marktanteilverluste sind in einigen Produkteigenschaften des Laminatbodens begründet, die vom Endverbraucher als eher unangenehm empfunden werden. Dabei handelt es sich unter anderen um die Haptik und den Raumschall beim Begehen. Die Oberfläche von Laminatböden (Melaminharz) wird als unangenehm kalt empfunden. Außerdem führt der Herstellprozess zu einem Produkt, das durch die ausgehärtete Harzoberfläche eine Art Trommeleffekt beim Begehen erzeugt. Eine Vielzahl von Produkten auf Kunststoffbasis besitzt die oben geschilderten Nachteile nicht und hat durch Verbesserungen im Dekor und in der Struktur der Oberfläche Marktanteile dazugewonnen.

Zur Lösung der beschriebenen Probleme ist in der Vergangenheit bereits versucht worden, Laminatböden nach der Herstellung mit Lacken oder Folien in der Oberfläche zu veredeln. Zu diesem Zweck wurden die bereits verpressten Laminatböden in einem weiteren Arbeitsschritt mit einem Lack ablackiert (EP 2 873 523 B1) Diese Verfahren sind aber technisch aufwändig, weil zunächst mit Hilfe eines Primers die Haftung des Lackes sichergestellt werden muss. Weiterhin ist der zusätzliche Arbeitsschritt mit Kosten verbunden. Auch eine zusätzliche Linie zur Applizierung des Lackes verursacht Kosten.

Auch das in der EP 2130991 A2 beschriebene Verfahren stellt in diesem Zusammenhang keine Ausnahme dar. Auch hier wird in mehreren Verfahrensschritten auf eine Trägerplatte eine Beschichtung aufgebracht, die unter anderem eine thermoplastische Folie enthält, allerdings keine TPU-Folie.

Aus der US 2013/0029115 A1 ist die Herstellung einer Fliese bekannt, die aus einer Faserschicht mit einem umweltfreundlichen wasserbasierten Harz, einer darauf angeordneten Dekorfaserschicht enthaltend ein zweites umweltfreundliches wasserbasiertes Harz, und eine darauf vorgesehene abriebfeste Schicht besteht.

CN 107165376 A betrifft ein Kunststoffpaneel basierend auf einem PVC-Substrat als Trägermaterial, auf welchem eine Dekorschicht und eine Abriebschicht angeordnet sind. Die abriebfeste Schicht ist ein Aluminiumoxid-haltiges Papier.

Die sich aus den bisherigen Ansätzen ergebenden Nachteile können wie folgt zusammengefasst werden: kalte Oberfläche und Raumschallproblematik der Laminatböden; Folienbeschichtung oder weitere Lackbeschichtung als zusätzlicher Arbeitsschritt.

Der Erfindung liegt daher die technische Aufgabe zu Grunde zumindest einen Teil der oben beschriebenen Nachteile zu eliminieren. Dabei soll wenn möglich auf vorhandene Produktionstechnologien und -anlagen zurückgegriffen werden. Zudem soll sich der Herstellprozess nicht nur den Einsatz von zusätzlichen Produktionsschritten oder Produktionsanlagen verteuern. Auch soll das positive Eigenschaftsprofil erhalten bleiben.

Diese Aufgabe wird erfindungsgemäß durch ein Verbundmaterial mit den Merkmalen des Anspruchs 1 und Verfahren zu dessen Herstellung gelöst.

Entsprechend wird ein Verbundmaterial zur Verwendung in einem Fußbodenbelag, insbesondere ein Holzwerkstoffmaterial und ein Laminat, bereitgestellt, wobei das Verbundmaterial umfasst:
- mindestens ein Trägermaterial,
- mindestens eine auf dem mindestens einen Trägermaterial vorgesehene Formaldehydharz-haltige Schicht (oder harzhaltige Lage); und
- mindestens eine auf der mindestens einen Formaldehydharz-haltigen Schicht angeordnete Folie aus mindestens einem thermoplastischen Elastomer.

In der vorliegenden Erfindung wird somit eine thermoplastische Folie (z.B. TPU-Folie) auf ein Trägermaterial, wie eine direktbedruckte Holzwerkstoffplatte Platte oder ein imprägniertes Papier aufgebracht. Diese Folie wird hierzu in einer Presse, z.B. KT-Presse auf eine bedruckte, mit vorkondensiertem Melaminharz beschichtete Holzwerkstoffplatte, ein Overlayimprägnat oder ein Dekorimprägnat aufgelegt; d.h. es ist keine weitere Zwischenlage vor Auflegen der thermoplastischen Folie vorgesehen.

Danach wird die Folie unter den üblichen Pressbedingungen auf die Holzwerkstoffplatte aufgepresst. Anschließend kann diese Platte ebenfalls auf den üblicherweise verwendeten Frässstrassen zu Laminatbodendielen weiterverarbeitet werden. Die Folie kann entweder transparent sein oder einen rückseitigen Aufdruck besitzen. Bei den verwendeten Imprägnaten handelt es sich Standardimprägnate.

Dieses einstufige Verfahren ermöglicht überraschenderweise eine gute Haftung auf der (teilvernetzten oder voll vernetzten) Harzoberfläche, insbesondere Melaminoberfläche, wie diese in einem Flüssigauftrag oder einem imprägnierten Papier vorliegt. Dies steht im Wiederspruch zu einer Vielzahl von Versuchen bei denen durch das Vernetzen des Melaminharzes Wasser/Wasserdampf entsteht, welches/welcher eine Haftung einer Folie verhinderte.

Wie unten erläutert, zeigte sich, dass dieses Verfahren auch auf die Herstellung von Schichtstoffen angewendet werden kann. Man kann die thermoplastische Folie, z.B. TPU-Folie bei der Herstellung von CPL oder HPL auf das Dekorimprägnat oder ein Overlayimprägnat, das auf einem Dekorimprägnat positioniert ist, zusammen mit Kernlagen und/oder Pergament auf der Unterseite des Dekorimprägnats in einer Etagen- oder Durchlaufpresse verpressen. Bei der Verwendung von Strukturgebern kann auf den Auftrag eines Trennmittels verzichtet werden. Diese Schichtstoffe können neben Fußbodenanwendungen natürlich auch in anderen Bereichen eingesetzt werden, in denen eine angenehme Haptik erwünscht ist (Möbel, Innenausstattung usw.). Dies gilt selbstverständlich auch für die Produkte aus dem oben geschilderten Verfahren.

Die thermoplastische Folie, z.B. TPU-Folie kann zur Erreichung gewünschter Eigenschaften zusätzlich eine Oberflächenausrüstung mit z. B. einem Lack besitzen. Damit kann z. B. das Verhalten gegenüber Kratzbeanspruchung, chemischer Beanspruchung, Abriebbeanspruchung usw. positiv beeinflusst werden. Auch im Hinblick auf die statische Aufladung, die Anschmutzbarkeit usw. kann durch einen Lack ein positiveres Verhalten erzielt werden. Dabei kann der Lack bereits bei der Herstellung der Folie aufgebracht werden.

Es ergeben sich verschiedene Vorteile: So können vorhandene Maschinen genutzt werden; die Technologie ist einfach (Einschritt); einheitliche Vorstufe für verschiedene Produkte, keine gravierende Änderung der Produktionsparameter.

Gemäß einer Ausführungsform des vorliegenden Verbundmaterials ist die mindestens eine auf dem mindestens einen Trägermaterial vorgesehene Formaldehydharz-haltige Schicht eine harzimprägnierte Papierlage, insbesondere harzimprägnierte Dekorpapierlage und/oder eine harzimprägnierte Overlaypapierlage. Zur Harzimprägnierung werden insbesondere Formaldehyd-Harze, wie Melamin-Formaldehyd-Harz, Harnstoff-Formaldehyd-Harz oder Melamin-Harnstoff-Formaldehyd-Harz, verwendet.

Dekorpapiere bzw. Dekorpapierlagen sind einlagige Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Vorzugsweise werden Dekorpapiere mit einer Imprägnierung, wie beispielsweise einer wärmehärtbaren Kunstharzimprägnierung, verwendet.

Häufig wird das Dekorpapier zusammen mit einer Verschleißschicht (Overlaypapierlage) als eine einzelne Schicht geliefert. Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel abriebfeste Partikel vorzugsweise ausgewählt aus der Gruppe enthaltend Aluminiumoxide, Borcarbide, Siliziumdioxide, Siliziumcarbide und Glaspartikel, in das Harz des Overlays eingemischt sind, um die Abriebfestigkeit des Laminats bzw. der Holzwerkstoffplatte zu erhöhen.

Die vorliegend verwendeten harzimprägnierten Dekorpapierlagen weisen ein Papiergewicht zwischen 60 und 100 g/m², bevorzugt 80 g/m² auf eine Imprägnierungsgrad (Harzauftrag) von ca. 100% auf. Die vorliegend verwendeten harzimprägnierten Overlaypapiere weisen ein Papiergewicht zwischen 20 und 50 g/m², bevorzugt 30 g/m² , einen Imprägnierungsgrad (Harzauftrag) von 400% und einen Korundgehalt von 25 g/m² auf.

Gemäß einer weiteren Ausführungsform des vorliegenden Verbundmaterials ist die mindestens eine auf dem mindestens einen Trägermaterial vorgesehene Formaldehydharzhaltige Schicht eine als Flüssigauftrag aufgetragene Harzschicht. Diese Harzschicht basiert insbesondere auf einem wässrigen Formaldehydharz, wie Melamin-Formaldehyd-Harz, Harnstoff-Formaldehyd-Harz oder Melamin-Harnstoff-Formaldehyd-Harz.

Die flüssig aufgetragene Harzschicht wird vorteilhafterweise nach dem Auftrag in einer geeigneten Trocknungsvorrichtung getrocknet. Dieser Schritt dient einem definierten Vorkondensieren der Harzschicht und der Einstellung des Restfeuchtegrades. Damit wird die Reaktivität der Harzschicht und damit die Haftung der anschließend aufgebrachten thermoplastischen Folie sichergestellt. Hierbei kommt es bevorzugt zur Ausbildung von Prekondensaten, wie im Folgenden erläutert.

Die zur Imprägnierung von Papierlagen oder auch zur Direktbeschichtung der Trägermaterialien verwendeten Harze durchlaufen während der Verarbeitung verschiedene Polymerations- und Vernetzungszustände.

Dies sei im Folgenden anhand des häufig zum Einsatz kommenden Melamin-FormaldehydHarzes dargestellt.

Melamin und Formaldehyd reagieren zunächst unter Ausbildung von Methylolgruppen an den Aminogruppen des Melamins zu wasserlöslichen Produkten (siehe Schema l).

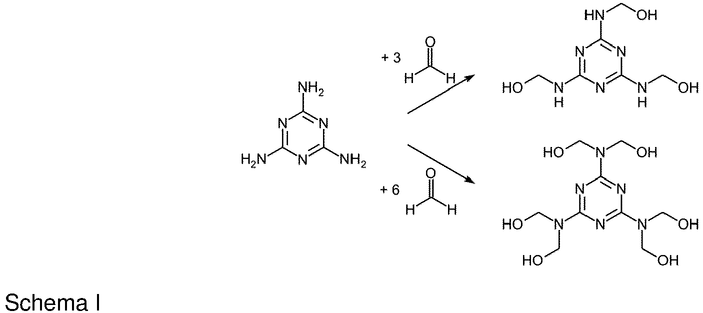

Diese Melamin-Formaldehyd-Monomere unterliegen nach Zugabe eines geeigneten Katalysators, bevorzugt einer Lauge , der Polykondensation, wobei es zur Verknüpfung der Monomere über Ether- und Methylengruppen und zur Ausbildung von höhermolekularen Prekondensaten und Polykondensaten kommt (siehe Schema II).

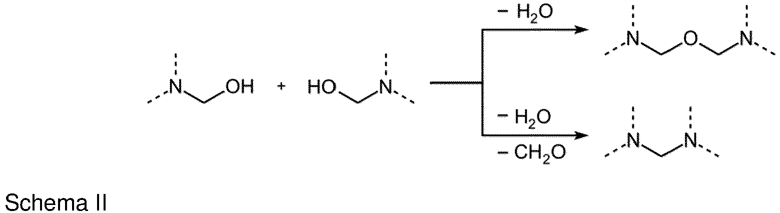

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

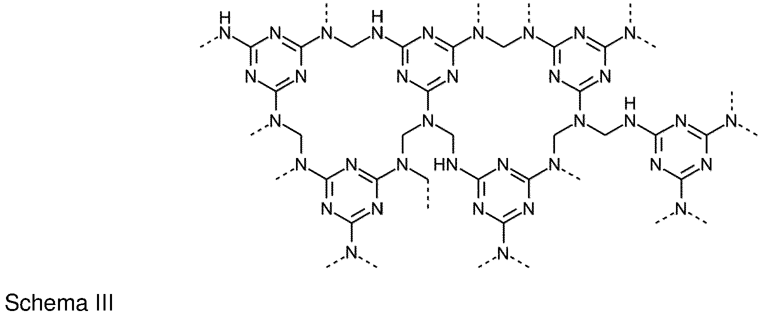

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Im Falle des vorliegenden Verbundmaterials befindet sich die harzhaltige Schicht (insbesondere vor dem Auftrag der thermoplastischen Folie) im B-Zustand; d.h. das Harz ist noch nicht vollständig ausgehärtet, sondern befindet sich bevorzugt noch im teilvernetzten Zustand. Dies ermöglicht bei der Weiterverarbeitung in der Presse noch ein Fließen/Verfilmen in Kombination mit der Weitervernetzung der Kunstharze. Der B-Zustand des Harzes liegt bevorzugt sowohl bei Verwendung einer flüssigen Harzschicht (Flüssigoverlay) als auch im Fall der Verwendung von Dekorimprägnaten/Overlayimprägnaten vor.

In einer bevorzugten Ausführungsform des vorliegenden Verbundmaterials ist die mindestens eine Folie aus mindestens einem thermoplastischen Elastomer ausgewählt aus der Gruppe enthaltend TPU (thermoplastische Urethane), TPA (thermoplastische Polyamide), TPC (thermoplastische Copolyester), TPS (thermoplastische Styrol-Blockcopolymere). Die Folie kann entweder transparent sein oder kann auch eine rückseitige Dekorschicht aufweisen.

Besonders bevorzugt die Verwendung einer TPU-Folie. Diese kann zusätzlich eine Lackbeschichtung aufweisen. Hierfür können UV- oder Polyurethan-Lacke verwendet werden. Die Dicke der Folie aus mindestens einem thermoplastischen Elastomer beträgt zwischen 80 - 300 µm, bevorzugt 150 - 250 µm. Es können auch mehrere Folien verwendet werden, die entweder bei der Verpressung einzeln aufgelegt werden oder in einem vorgelagerten Schritt bereits miteinander verbunden werden.

In einer Variante des vorliegenden Verbundmaterials ist vorgesehen, dass das mindestens eine Trägermaterial, insbesondere eine Trägerplatte, aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) ist.

Entsprechend kann das vorliegende Verbundmaterial in einer Variante folgenden Schichtaufbau (von unten nach oben gesehen) aufweisen: Holzwerkstoffplatte - mindestens eine harzimprägnierte Papierlage - mindestens eine Folie aus thermoplastischen Material. Die Holzwerkstoffplatte kann auch einen Gegenzug aufweisen.

In einem bevorzugten Ausführungsbeispiel sieht der Schichtaufbau wie folgt aus (von unten nach oben gesehen): Gegenzugimprägnat - HDF-Trägerplatte - Dekorimprägnat/ggf. Overlayimprägnat - TPU-Folie.

In einer anderen Variante kann das vorliegende Verbundmaterial folgenden Schichtaufbau (von unten nach oben gesehen) aufweisen: ggfs. Gegenzug - Holzwerkstoffplatte - mindestens eine Harzgrundierung - mindestens eine Farbgrundierung - mindesten eine Primerschicht - mindestens eine im Direktdruck aufgetragene Dekorschicht - mindestens eine Harzschicht - mindestens eine Folie aus thermoplastischen Material.

In einer noch weiteren Variante kann das vorliegende Verbundmaterial folgenden Schichtaufbau (von unten nach oben gesehen) aufweisen: ggfs. Gegenzug - Holzwerkstoffplatte - mindestens eine Harzgrundierung - mindestens eine Farbgrundierung - mindestens eine Harzschicht - mindestens eine Folie aus thermoplastischen Material.

Als Harzgrundierung wird ein Formaldehydharz, insbesondere ein Melamin-Formaldehyd-Harz verwendet. Die Auftragsmenge der Harzgrundierung kann zwischen 10 - 30 g Melaminharz fl / m2, bevorzugt 20 g Melaminharz fl /m2, betragen. Der Feststoffgehalt der Harzgrundierung kann zwischen 60-70 Gew%, bevorzugt bei 65 Gew% liegen.

Als Farbgrundierung wird bevorzugt eine Zusammensetzung aus Kasein oder Sojaprotein als Bindemittel und anorganische Pigmente, insbesondere anorganische Farbpigmente verwendet. Als Farbpigmente können in der Grundierungsschicht weiße Pigmente wie Titandioxid verwendet werden oder aber auch weitere Farbpigmente, wie Calciumcarbonat, Bariumsulfat oder -carbonat. Die Grundierung kann neben den Farbpigmenten und dem Kasein oder Sojaprotein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann. Die Auftragsmenge der Farbgrundierung beträgt 5-10 g Grundierung fl / m² Auftragswerk und Lage.

Die Menge des aufgetragenen flüssigen Primers beträgt vorliegend zwischen 5 und 30 g/m², bevorzugt zwischen 10 und 20 g/m², insbesondere bevorzugt zwischen 10 und 15 g/m². Als Primer werden bevorzugt Verbindungen auf Isocyanatbasis, wobei nicht-aromatische, aliphatische Isocyanate, wie Hexamethylendiisocyanat, Isophorondiisocyanat, oder Präpolymere, die diese Isocyanate enthalten besonders bevorzugt sind.

Wie oben bereits erwähnt, kann die Dekorschicht entweder in Form eines harzimpägnierten Dekorpapieres vorliegen oder kann mittels Direktdruck aufgetragen werden. Im Falle eines Direktdruckes erfolgt der Auftrag einer wasserbasierten, pigmentierten Druckfarbe im Tiefdruck- oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund des Anpressdruckes der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze. Zusammen mit dem Dekor werden ebenfalls die für die Ausrichtung in der Presse erforderlichen Markierungen aufgedruckt.

Die folgende Harzschicht (als harzhaltige Schicht) wird mit einem Feststoffgehalt zwischen 60 und 80 Gew%, bevorzugt 65 und 70 Gew%, insbesondere bevorzugt zwischen 65 und 67 Gew% aufgetragen. Die Menge der auf den Oberseite der Holzwerkstoffplatte aufgetragenen Harzschicht kann zwischen 10-40 g/m², bevorzugt 10-30 g/m², insbesondere bevorzugt 20 g/m² betragen.

Diese Harzschicht kann Glaskugeln enthalten, die als Abstandshalter zum Pressblech im nachfolgenden Pressschritt in der Kurztatpressen fungieren. Die bevorzugt verwendeten Glaskugeln weisen einen Durchmesser von 80-100 µm auf. Die Glaskugeln können zusammen mit der Harzschicht aufgebracht werden oder separat auf die Harzschicht aufgestreut werden. Die Menge an Glaskugeln beträgt 1 bis 10 g/m², bevorzugt 5 g/m². Die Glaskugeln können ebenfalls in silanisierter Form vorliegen. Durch die Silanisierung der Glaskugeln wird die Einbettung der Glaskugeln in die Harzmatrix verbessert.

In einer weiteren Ausführungsform ist es möglich, abriebfeste Partikel auf die Harzschicht, bevorzugt noch nasse Harzschicht, aufzustreuen. Als abriebfeste Partikel können Partikel aus Korund (Aluminiumoxide), Borcarbide, Siliziumdioxide, Siliziumcarbide verwendet werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf. Es werden abriebfeste Partikel mit Körnungen in den Klassen F180 bis F240, bevorzugt F220 verwendet. Die Korngröße der Klasse F180 umfasst einen Bereich von 53 - 90 µm, F220 von 45-75 µm, F230 34-82 µm, F240 28-70 µm (FEPA Norm). Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane.

Die Menge an aufgestreuten abriebfesten Partikeln beträgt 5 bis 50 g/m², bevorzugt 5 bis 30 g/m². Die Menge der aufgestreuten abriebfesten Partikel hängt von der zu erreichenden Abriebklasse und der Korngröße ab.

Wie oben bereits erwähnt, kann auf die Unterseite der Holzträgerplatte bzw. Holzwerkstoffplatte ein Gegenzug aufgebracht werden. Dadurch werden insbesondere die, durch die auf der Oberseite der Holzwerkstoffplatte aufgebrachten Dekor- und Overlaylagen wirkenden Zugkräfte ausgeglichen. In einer bevorzugten Ausführungsform wird der Gegenzug als Zelluloselage ausgeführt, die imprägniert ist. Beispielsweise kann der Gegenzug als ein mit einem wärmehärtbaren Kunstharz imprägniertes Papier ausgeführt sein. In einer besonders bevorzugten Ausführungsform entspricht der Schichtaufbau des Gegenzugs dem Schichtaufbau und der jeweiligen Schichtdicke genau der auf der Oberseite aufgebrachten Schichtfolge aus Dekor- und Overlaylagen. Es ist aber auch möglich, als Gegenzug eine flüssige Harzschicht, z.B. Melamin-Formaldehyd-Harz auf die Unterseite der Holzwerkstoffplatte aufzutragen.

Besonders bevorzugt sind die folgenden Ausführungsformen des vorliegenden Verbundmaterials (von unten nach oben gesehen):
a) Gegenzug (flüssig oder als Imprägnat) - HDF-Trägerplatte - Melaminharzgrundierung - Farbgrundierung - Primer - Druckdekor - Harzschicht als Abdeckschicht mit Glaskugeln und aufgestreuten Korund - TPU-Folie;
b) Gegenzug (flüssig) - HDF-Trägerplatte - Melaminharzgrundierung - Farbgrundierung - Primer - Druckdekor - Harzschicht als Abdeckschicht mit Glaskugeln - weitere Harzschicht mit aufgestreuten Korund - TPU-Folie;
c) Gegenzug (flüssig) - HDF-Trägerplatte - Melaminharzgrundierung - Farbgrundierung - Harzschicht als Abdeckschicht mit Glaskugeln - rückseitig bedruckte TPU-Folie.

In einer weiteren bevorzugten Ausführungsform des vorliegenden Verbundmaterials ist das mindestens eine Trägermaterial eine Kraftpapierlage, insbesondere eine Natronkraftpapierlage, oder eine Folienlage.

In diesem Fall kann das Verbundmaterial den folgenden Schichtaufbau aufweisen (von unten nach oben): mindestens eine Kraftpapierlage - mindestens eine harzhaltige Papierlage - mindestens eine Folie aus thermoplastischen Material.

In einer Variante wird ein CPL-Laminat mit folgenden Schichtaufbau (von unten nach oben) bereitgestellt: Transparentpapierlage (Pergamin) - Kraftpapierlage (NKP-Kernlage) - Dekorimprägnat als harzhaltige Papierlage - TPU-Folie - Strukturgeber.

Das vorliegende Verbundmaterial wird in einem Verfahren umfassend die folgenden Schritte hergestellt:
- Bereitstellen von mindestens einem Trägermaterial,
- Auftragen von mindestens einer Formaldehydharz-haltigen Schicht,
- Auflegen von mindestens einer Folie aus mindestens einem thermoplastischen Elastomer; und
- Verpressen des Schichtaufbaus, bevorzugt in einer Kurztaktpresse.

In einer Ausführungsform umfasst das vorliegende Verfahren folgende Schritte:
- Bereitstellen von mindestens einer Holzträgerplatte;
- Auflegen von mindestens einer Formaldehydharz-haltigen Papierlage auf die Holzträgerplatte;
- Auflegen von mindestens einer Folie aus mindestens einem thermoplastischen Elastomer; und
- Verpressen des Schichtaufbaus, bevorzugt in einer Kurztaktpresse.

In einer anderen Ausführungsform umfasst das vorliegende Verfahren folgende Schritte:
- Bereitstellen von mindestens einer Holzträgerplatte;
- Auftragen von mindestens einer flüssigen Harzschicht aus Formaldehydharz auf die Holzträgerplatte;
- Auflegen von mindestens einer Folie aus mindestens einem thermoplastischen Elastomer; und
- Verpressen des Schichtaufbaus, bevorzugt in einer Kurztaktpresse.

Vor dem Auftrag der mindestens einen harzhaltigen Schicht, insbesondere im Falle einer flüssigen Harzschicht, kann mindestens eine Harzgrundierung, mindestens eine Farbgrundierung und ggfs. mindestens eine Dekorschicht im Direktdruck aufgetragen werden.

Die flüssige Harzschicht kann auch mit Glaskugeln versehen sein. Zudem ist es auch möglich, zur Erhöhung der Abriebfestigkeit abriebfeste Partikel, wie Korund aufzustreuen. Zusammensetzung und Mengen der aufgetragenen Schichten entsprechen den oben beschriebenen.

Wie erwähnt, werden die Schichtaufbauten ggfs, zusammen mit einem Gegenzug in einem Arbeitsschritt unter Wirkung von Temperatur und Druck in einer Kurztaktpresse zu einem Laminat verpresst. Übliche Kurztakt-Pressen arbeiten beispielsweise bei einem Druck von 30 bis 60 kg/cm², einer Temperatur an der Holzwerkstoffoberfläche von etwa 160 - 195 °C und einer Presszeit von 6 bis 14 Sekunden.

In einer anderen Variante umfasst das Verfahren die folgenden Schritte:
- Bereitstellen von mindestens einer Kraftpapierlage;
- Bereitstellen von mindestens einer Formaldehydharz-haltigen Schicht, insbesondere von mindestens einer Formaldehydharz-haltigen Papierlage;
- Bereitstellen von mindestens einer Folie aus mindestens einem thermoplastischen Elastomer; und
- Verpressen des Schichtaufbaus.

In einer Ausführungsform wird diese Verfahrensvariante wie folgt durchgeführt:
- Bereitstellen von mindestens einer Transparentpapierlage (Pergaminlage);
- Bereitstellen von einer Kraftpapierlage;
- Bereitstellen von mindestens einer Formaldehydharz-haltigen Papierlage, insbesondere einer Formaldehydharz-haltigen Dekorpapierlage,
- Bereitstellen von mindestens einer Folie aus mindestens einem thermoplastischen Elastomer;
- Herstellen einer Schichtung aus einer Transparentpapierlage, einer Kraftpapierlage, einer harzhaltigen Papierlage und einer Folie aus einem thermoplastischen Elastomer; und
- Verpressen der Schichtung in einer Heißpresse, insbesondere in einer Doppelbandpresse.

Der Schichtaufbau wird bei 160°C und einer Geschwindigkeit von 6m / min durch die Doppelbandpresse gefahren und verpresst.

In einer Ausführungsform ist vorgesehen, dass auf der Folie aus thermoplastischen Elastomer mindestens ein Trennmittel aufgebracht wird, wodurch ein Anbacken bzw. Ankleben der Folie an den Pressblechen der Presse verhindert wird. Zu diesem Zweck wurde ein Trennmittel (PAT 523/RP, Fa. Würtz) in einer Verdünnung von 1 zu 10 in einer Menge von 20- 60 g/ m², bevorzugt 50 g/m² auf die Folienoberfläche aufgetragen (z.B. im Sprühauftrag) und anschließend das überschüssige Wasser mit Hilfe von warmer Luft verdunstet.

Die vorliegende Erfindung wird nachfolgend an mehreren Beispielen erläutert.

### Ausführungsbeispiel 1:

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe von einem Umluft- und/oder IR-Trockner durchgeführt. Danach wird ein Primer aufgetragen (Auftragsmenge 10 - 20 g fl/ m²). Dieser wird ebenfalls getrocknet. Auf diesen Primer wird dann im Tiefdruck- oder Digitaldruckverfahren ein Dekor aufgedruckt.

Anschließend wird eine Abdeckschicht aus Melaminharz aufgetragen (Auftragsmenge: 10 - 30 g Melaminharz fl./ m², Feststoffgehalt 65 Gew%). Das Melaminharz enthält Glaskugeln (Durchmesser Glaskugeln: 80 - 100 µm, Auftragsmenge: 5 g Glaskugeln/m²) als Abstandshalter. Zusätzlich kann noch Korund auf die noch nasse Harzoberfläche gestreut werden (Auftragsmenge: 5 - 30 g Korund/m², Korngröße: F220 nach FEPA-Standard). Die Platten durchlaufen wiederum einen Trockner. Danach werden sie in einem Paternoster abgekühlt.

Die Platten werden dann an einer KT-Presse auf der Oberseite mit einer TPU-Folie (Foliendicke: 250 µm) und auf der Rückseite mit einem Gegenzug entweder in flüssiger Form oder als Blattware versehen.

Dann wird der Aufbau in der KT-Presse bei T=160°C, p=40 kg/cm² und t=14 sec verpresst. Nach dem Abkühlen wird zunächst mit Hilfe eines Gitterschnitttests die Haftung (DIN EN ISO 2409 - 2013 - 06) der Folie geprüft, danach werden die Platten zu Rohfixmassen zerteilt und anschließend mit einem leimlosen Profil versehen.

### Ausführunasbeispiel 2:

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe von einem Umluft und/oder IR-Trockner durchgeführt. Danach wird ein Primer aufgetragen (Auftragsmenge 10 - 20 g fl/ m²). Dieser wird ebenfalls getrocknet. Auf diesen Primer wird dann im Tiefdruck- oder Digitaldruckverfahren ein Dekor aufgedruckt.

Anschließend wird eine Abdeckschicht aus Melaminharz aufgetragen (Auftragsmenge: 10 - 30 g Melaminharz fl./ m², Feststoffgehalt 65 Gew%). Das Melaminharz enthält Glaskugeln (Durchmesser Glaskugeln: 80 - 100 µm, Auftragsmenge: 5 g Glaskugeln/m²) als Abstandshalter. Die Platten durchlaufen wiederum einen Trockner. Danach werden sie in einem Paternoster abgekühlt.

Die Platten werden dann an einer Produktionslinie auf der Oberseite mit Melaminharz (Auftragsmenge: 60 g Melaminharz fl./m², Feststoff: 65 Gew%. ) beschichtet. Gleichzeitig wird auf der Rückseite ein Melaminharz als Gegenzug in der gleichen Menge ebenfalls mit Hilfe einer Walze aufgetragen. Dann erfolgt das Aufstreuen von Korund auf die Oberseite der Platte (Auftragsmenge: 20 g Korund/m², Korngröße: F220 nach FEPA-Standard).

Danach wird vor einer KT-Presse auf der Oberseite eine TPU-Folie aufgelegt (Foliendicke: 250µm). Dann wird der Aufbau in der KT-Presse bei T=160°C, p=30 kg/cm² und t=14 sec verpresst. Nach dem Abkühlen wird zunächst mit Hilfe eines Gitterschitttests (DIN EN ISO 2409 - 2013 - 06) die Haftung der Folie geprüft, danach werden die Platten zu Rohfixmassen zerteilt und anschließend mit einem leimlosen Profil versehen.

### Ausführunasbeispiel 3:

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe von einem Umluft und/oder IR-Trockner durchgeführt.

Anschließend wird eine Abdeckschicht aus Melaminharz aufgetragen (Auftragsmenge: 10 - 30 g Melaminharz fl./ m², Feststoffgehalt 65 Gew%). Das Melaminharz enthält Glaskugeln (Durchmesser Glaskugeln: 80 - 100 µm, Auftragsmenge: 5 g Glaskugeln/m²) als Abstandshalter. Die Platten durchlaufen wiederum einen Trockner. Danach werden sie in einem Paternoster abgekühlt. An einer weiteren Produktionslinie wird auf der Rückseite ein Melaminharz als Gegenzug mit Hilfe einer Walze aufgetragen (Auftragsmenge: 80 g Melaminharz fl./m², Feststoffgehalt: 65 Gew%).

Danach wird vor einer KT-Presse auf der Oberseite eine rückseitig bedruckte TPU-Folie aufgelegt (Foliendicke: 250µm). Dann wird der Aufbau in der KT-Presse bei T=160°C, P=35 kg/cm² und t=14 sec verpresst. Nach dem Abkühlen wird zunächst mit Hilfe des Gitterschnitttests (DIN EN ISO 2409 - 2013 - 06) die Folienhaftung geprüft, danach werden die Platten zu Rohfixmassen zerteilt und anschließend mit einem leimlosen Profil versehen.

| | Ausführungsbeispiel 1 | Ausführungsbeispiel 2 | Ausführungsbeispiel 3 |
|---|---|---|---|
| Gitterschnitt | Gt 0 | Gt 0 | Gt 0 |
| Deckschichtabhebefestigkeit (N/mm²) | 2,26 | 1,99 | 2,05 |
| | | | |

### Ausführunasbeispiel 4:

Auf eine HDF (Format: 2800 x 2070 x 7 mm) wird vor einer Kurztaktpresse in einer Ziehstation oberseitig ein Dekorimprägnat (Papiergewicht: ca. 80 g/m², Harzauftrag: ca. 100% Melaminharz, VC-Wert: ca. 6%) und unterseitig ein Gegenzugimprägnat aufgelegt.

Danach wird vor der KT-Presse zusätzlich auf der Oberseite eine TPU-Folie aufgelegt (Foliendicke: 250µm). Dann wird der Aufbau in der KT-Presse bei T=160°C, P=35 kg/cm² und t=14 sec verpresst. Nach dem Abkühlen wird zunächst mit Hilfe des Gitterschnitttests (DIN EN ISO 2409 - 2013 - 06) die Folienhaftung geprüft, danach werden die Platten zu Rohfixmassen zerteilt und anschließend mit einem leimlosen Profil versehen.

### Ausführunasbeispiel 5:

Auf eine HDF (Format: 2800 x 2070 x 7 mm) wird vor einer Kurztaktpresse in einer Ziehstation oberseitig ein Dekorimprägnat (Papiergewicht: ca. 80 g/m², Harzauftrag: ca. 100% Melaminharz, VC-Wert: ca. 6%), ein Overlayimprägnat (Papiergewicht: 30 g/m², Harzauftrag: 400 Gew% und 25 g Korund/m²) und unterseitig ein Gegenzugimprägnat aufgelegt.

Danach wird vor der KT-Presse zusätzlich auf der Oberseite eine TPU-Folie aufgelegt (Foliendicke: 250µm). Dann wird der Aufbau in der KT-Presse bei T=160°C, P=35 kg/cm² und t=17 sec verpresst. Nach dem Abkühlen wird zunächst mit Hilfe des Gitterschnitttests (DIN EN ISO 2409 - 2013 - 06) die Folienhaftung geprüft, danach werden die Platten zu Rohfixmassen zerteilt und anschließend mit einem leimlosen Profil versehen.

### Ausführunasbeispiel 6:

An einer CPL-Presse (Arbeitsbreite: 2070 mm) werden von einer Abrollstation folgende bahnenförmigen Materialien abgerollt:
- Strukturgeber ( Büttenstruktur )
- TPU-Folie ( Stärke 250 µm )
- Dekorimprägnat ( Papiergewicht: ca. 80 g/m², Harzauftrag: ca. 100% Melaminharz, VC-Wert: ca. 6% )
- NKP-Kernlage ( Papiergewicht: 145 g/m², Harzauftrag: ca. 90 Gew.% Mischharz Melamin/Phenol, VC-Wert: ca. 6% ), 3 x
- Pergament ( 60 g/m² )

Dieser Aufbau wird mit einer Geschwindigkeit von 6 m/min und einer Temperatur am Produkt von 160°C durch die CPL-Presse gefahren. Die CPL-Presse hatte eine Presszone von 6 m. Nach dem Abkühlen wurde an dem Laminat ein Gitterschnittest durchgeführt. Der eine sehr gute Haftung der TPU-Folie auf dem Dekor zeigte (Gt 0, DIN EN ISO 2409 - 2013 - 06).

## Patentansprüche

1. Verbundmaterial zur Verwendung in einem Fußbodenbelag, insbesondere ein Holzwerkstoffmaterial und ein Laminat,
umfassend
- mindestens ein Trägermaterial,
- mindestens eine auf dem mindestens einen Trägermaterial vorgesehene Formaldehydharz-haltige Schicht; und
- mindestens eine auf der mindestens einen Formaldehydharz-haltigen Schicht angeordnete Folie aus mindestens einem thermoplastischen Elastomer.

2. Verbundmaterial nach einem der vorhergehenden Ansprüche, **dadurch gekennzeichnet, dass** die mindestens eine auf dem mindestens einen Trägermaterial vorgesehene Formaldehydharz-haltige Schicht eine harzimprägnierte Papierlage, insbesondere harzimprägnierte Dekorpapierlage und/oder eine harzimprägnierte Overlaypapierlage ist.

3. Verbundmaterial nach einem der vorhergehenden Ansprüche, **dadurch gekennzeichnet, dass** die mindestens eine auf dem mindestens einen Trägermaterial vorgesehene Formaldehydharzharzhaltige Schicht eine als Flüssigauftrag aufgetragene Harzschichtaus einem Formaldehydharz, ist.

4. Verbundmaterial nach einem der vorhergehenden Ansprüche, **dadurch gekennzeichnet, dass** die mindestens eine Folie aus mindestens einem thermoplastischen Elastomer aus der Gruppe enthaltend TPU (thermoplastische Urethane), TPA (thermoplastische Polyamide), TPC (thermoplastische Copolyester), TPS (thermoplastische Styrol-Blockcopolymere) ist.

5. Verbundmaterial nach einem der vorhergehenden Ansprüche, **dadurch gekennzeichnet, dass** das mindestens eine Trägermaterial, insbesondere eine Trägerplatte, aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) ist.

6. Verbundmaterial nach Anspruch 5, **gekennzeichnet durch** folgenden Schichtaufbau: Holzwerkstoffplatte - mindestens eine harzimprägnierte Papierlage - mindestens eine Folie aus thermoplastischen Material.

7. Verbundmaterial nach Anspruch 5, **gekennzeichnet durch** folgenden Schichtaufbau: Holzwerkstoffplatte - mindestens eine Harzgrundierung - mindestens eine Farbgrundierung - mindesten eine Primerschicht - mindestens eine im Direktdruck aufgetragene Dekorschicht - mindestens eine Harzschicht - mindestens eine Folie aus thermoplastischen Material.

8. Verbundmaterial nach Anspruch 5, **gekennzeichnet durch** folgenden Schichtaufbau: Holzwerkstoffplatte - mindestens eine Harzgrundierung - mindestens eine Farbgrundierung - mindestens eine Harzschicht - mindestens eine Folie aus thermoplastischen Material.

9. Verbundmaterial nach einem der Ansprüche 1 - 4, **dadurch gekennzeichnet, dass** das mindestens eine Trägermaterial eine Kraftpapierlage, insbesondere eine Natronkraftpapierlage, oder eine Folienlage ist.

10. Verbundmaterial nach Anspruch 9, **gekennzeichnet durch** folgenden Schichtaufbau: mindestens eine Kraftpapierlage - harzhaltige Papierlage - mindestens eine Folie aus thermoplastischen Material.

11. Verfahren zum Herstellen eines Verbundmaterials nach einem der vorhergehenden Ansprüche umfassend die Schritte:
- Bereitstellen von mindestens einem Trägermaterial,
- Auftragen von mindestens einer Formaldehydharz-haltigen Schicht,
- Auflegen von mindestens einer Folie aus mindestens einem thermoplastischen Elastomer; und
- Verpressen des Schichtaufbaus.

12. Verfahren zum Herstellen eines Verbundmaterials nach Anspruch 11 umfassend die folgenden Schritte:
- Bereitstellen von mindestens einer Holzträgerplatte;
- Auflegen von mindestens einer Formaldehydharz-haltigen Papierlage;
- Auflegen von mindestens einer Folie aus mindestens einem thermoplastischen Elastomer; und
- Verpressen des Schichtaufbaus, bevorzugt in einer Kurztaktpresse.

13. Verfahren zum Herstellen eines Verbundmaterials nach Anspruch 11 umfassend die folgenden Schritte:
- Bereitstellen von mindestens einer Holzträgerplatte;
- Auftragen von mindestens einer flüssigen Harzschicht aus Formaldehydharz auf die Holzträgerplatte;
- Auflegen von mindestens einer Folie aus mindestens einem thermoplastischen Elastomer; und
- Verpressen des Schichtaufbaus, bevorzugt in einer Kurztaktpresse.

14. Verfahren zum Herstellen eines Verbundmaterials nach Anspruch 11 umfassend die folgenden Schritte:
- Bereitstellen von mindestens einer Kraftpapierlage;
- Bereitstellen von mindestens einer Formaldehydharz-haltigen Schicht, insbesondere von mindestens einer Formaldehydharz-haltigen Papierlage;
- Bereitstellen von mindestens einer Folie aus mindestens einem thermoplastischen Elastomer; und
- Verpressen des Schichtaufbaus.

15. Verfahren nach Anspruch 14, umfassend die folgenden Schritte:
- Bereitstellen von mindestens einer Transparentpapierlage (Pergaminlage);
- Bereitstellen von einer Kraftpapierlage;
- Bereitstellen von mindestens einer Formaldehydharz-haltigen Papierlage, insbesondere einer Formaldehydharz-haltigen Dekorpapierlage,
- Bereitstellen von mindestens einer Folie aus mindestens einem thermoplastischen Elastomer;
- Herstellen einer Schichtung aus einer Transparentpapierlage, einer Kraftpapierlage, einer harzhaltigen Papierlage und einer Folie aus einem thermoplastischen Elastomer; und
- Verpressen der Schichtung in einer Heißpresse, insbesondere in einer Doppelbandpresse.

## Claims

1. Composite material for use in a floor panel, in particular a wood-based material and a laminate,
comprehensive
- at least one support material,
- at least one formaldehyde resin-containing layer provided on said at least one support material; and
- at least one film of at least one thermoplastic elastomer disposed on the at least one formaldehyde resin-containing layer.

2. Composite material according to one of the preceding claims, **characterised in that** the at least one formaldehyde resin-containing layer provided on the at least one support material is a resin-impregnated paper layer, in particular a resin-impregnated decorative paper layer and/or a resin-impregnated overlay paper layer.

3. Composite material according to any one of the preceding claims, **characterised in that** the at least one formaldehyde resin-containing layer provided on the at least one support material is a resin layer of a formaldehyde resin applied as a liquid application.

4. Composite material according to any one of the preceding claims, **characterized in that** the at least one film is of at least one thermoplastic elastomer selected from the group consisting of TPU (thermoplastic urethanes), TPA (thermoplastic polyamides), TPC (thermoplastic copolyesters), TPS (thermoplastic styrene block copolymers).

5. Composite material according to one of the preceding claims, **characterised in that** the at least one support material, in particular a support board, is made of a wood material, plastic, a wood material-plastic mixture or a composite material, in particular a chipboard, medium-density fibreboard (MDF), high-density fibreboard (HDF), oriented strand board (OSB) or plywood board, a cement fibreboard, gypsum fibreboard and/or a WPC board (wood plastic composite).

6. Composite material according to claim 5, **characterised by** the following layer structure: wood-based panel - at least one resin-impregnated paper layer - at least one film of thermoplastic material.

7. Composite material according to claim 5, **characterised by** the following layered structure: wood-based panel - at least one resin base coat - at least one colour base coat - at least one primer layer - at least one decorative layer applied by direct printing - at least one resin layer - at least one film of thermoplastic material.

8. Composite material according to claim 5, **characterised by** the following layered structure: wood-based panel - at least one resin base coat - at least one colour base coat - at least one resin layer - at least one film of thermoplastic material.

9. Composite material according to any one of claims 1 - 4, **characterised in that** the at least one support material is a kraft paper layer, in particular a soda kraft paper layer or a film layer.

10. Composite material according to claim 9, **characterised by** the following layer structure: at least one kraft paper layer - resin-containing paper layer - at least one film of thermoplastic material.

11. A method of manufacturing a composite material according to any one of the preceding claims comprising the steps of:
- Providing at least one support material,
- Applying at least one layer containing formaldehyde resin,
- Applying at least one film of at least one thermoplastic elastomer; and
- Pressing the layer structure.

12. Method of manufacturing a composite material according to claim 11 comprising the following steps:
- Providing at least one wooden support board;
- placing at least one layer of paper containing formaldehyde resin;
- placing at least one film of at least one thermoplastic elastomer; and
- Pressing of the layer structure, preferably in a short-cycle press.

13. Method of manufacturing a composite material according to claim 11 comprising the following steps:
- Providing at least one wooden support board;
- Applying of at least one liquid resin layer of formaldehyde resin to the wooden support board;
- applying at least one film of at least one thermoplastic elastomer; and
- Pressing of the layer structure, preferably in a short-cycle press.

14. Method of manufacturing a composite material according to claim 11 comprising the following steps:
- Providing at least one layer of kraft paper;
- Providing at least one formaldehyde resin-containing layer, in particular at least one formaldehyde resin-containing paper layer;
- providing at least one film of at least one thermoplastic elastomer; and
- pressing of the layer structure.

15. Method according to claim 14, comprising the following steps:
- Providing at least one transparent paper layer (pergamin layer);
- Providing a layer of kraft paper;
- Providing at least one formaldehyde resin-containing paper layer, in particular a formaldehyde resin-containing decorative paper layer,
- Providing at least one film of at least one thermoplastic elastomer;
- Forming a laminate of a transparent paper layer, a kraft paper layer, a resin containing paper layer and a film of a thermoplastic elastomer; and
- Pressing of the layering in a hot press, in particular in a double belt press.

## Revendications

1. Matériau composite destiné à être utilisé dans un revêtement de sol, en particulier un matériau dérivé du bois et un stratifié,
comprenant
- au moins un matériau de support,
- au moins une couche contenant de la résine de formaldéhyde prévue sur l'au moins un matériau de support ; et
- au moins un film disposé sur l'au moins une couche contenant de la résine de formaldéhyde, composé d'au moins un élastomère thermoplastique.

2. Matériau composite selon l'une quelconque des revendications précédentes, **caractérisé en ce que** l'au moins une couche contenant de la résine de formaldéhyde prévue sur l'au moins un matériau de support est une strate de papier imprégnée de résine, en particulier une strate de papier décoratif imprégnée de résine et/ou une strate de papier de surcouche imprégnée de résine.

3. Matériau composite selon l'une quelconque des revendications précédentes, **caractérisé en ce que** l'au moins une couche contenant de la résine de formaldéhyde prévue sur l'au moins un matériau de support est une couche de résine appliquée en tant qu'application fluide, composée d'une résine de formaldéhyde.

4. Matériau composite selon l'une quelconque des revendications précédentes, **caractérisé en ce que** l'au moins un film est composé d'au moins un élastomère thermoplastique issu du groupe contenant des TPU (uréthanes thermoplastiques), des TPA (polyamides thermoplastiques), des TPC (copolyesters thermoplastiques), des TPS (copolymères séquencés à base de styrène thermoplastiques).

5. Matériau composite selon l'une quelconque des revendications précédentes, **caractérisé en ce que** l'au moins un matériau de support est en particulier un panneau de support, composé d'un matériau dérivé du bois, composé d'une matière plastique, d'un mélange de matière plastique et de matériau dérivé du bois ou d'un matériau composite, en particulier est un panneau de particules, un panneau de fibres à densité moyenne (MDF), panneau de fibres à haute densité (HDF), un panneau de grandes particules orientées (OSB) ou un panneau de contreplaqué, un panneau de fibres-ciment, un panneau de plâtre armé de fibres et/ou un panneau WPC (wood plastic composite, en matériau composite plastique/bois stratifié).

6. Matériau composite selon la revendication 5, **caractérisé par** la structure de couches suivante :
panneau en matériau dérivé du bois - au moins une strate de papier imprégnée de résine - au moins un film composé d'un matériau thermoplastique.

7. Matériau composite selon la revendication 5, **caractérisé par** la structure de couches suivantes :
panneau en matériau dérivé du bois - au moins un apprêt de résine - au moins un apprêt coloré - au moins une couche primaire - au moins une couche décorative appliquée lors de l'impression directe - au moins une couche de résine - au moins un film composé d'un matériau thermoplastique.

8. Matériau composite selon la revendication 5, **caractérisé par** la structure de couches suivante :
panneau en matériau dérivé du bois - au moins un apprêt de résine - au moins un apprêt de couleur - au moins une couche de résine - au moins un film composé d'un matériau thermoplastique.

9. Matériau composite selon l'une quelconque des revendications 1 - 4, **caractérisé en ce que** l'au moins un matériau de support est une strate de papier kraft, en particulier une strate de papier kraft à la soude ou une strate de film.

10. Matériau composite selon la revendication 9, **caractérisé par** la structure de couches suivante :
au moins une strate de papier kraft - une strate de papier contenant de la résine - au moins un film composé d'un matériau thermoplastique.

11. Procédé de fabrication d'un matériau composite selon l'une quelconque des revendications précédentes, comprenant les étapes :
- de fourniture d'au moins un matériau de support,
- d'application d'au moins une couche contenant de la résine de formaldéhyde,
- de dépôt d'au moins un film composé d'au moins un élastomère thermoplastique ; et
- de compression de la structure de couches.

12. Procédé de fabrication d'un matériau composite selon la revendication 11 comprenant les étapes suivantes :
- de fourniture d'au moins un panneau de support en bois ;
- de dépôt d'au moins une strate de papier contenant de la résine de formaldéhyde,
- de dépôt d'au moins un film composé d'au moins un élastomère thermoplastique ; et
- de compression de la structure en couches de manière préférée dans une presse à cycle court.

13. Procédé de fabrication d'un matériau composite selon la revendication 11 comprenant les étapes suivantes :
- de fourniture d'au moins un panneau de support en bois ;
- d'application d'au moins une couche de résine fluide composée de résine de formaldéhyde sur le panneau de support en bois ;
- de dépôt d'au moins un film composé d'au moins un élastomère thermoplastique ; et
- de compression de la structure stratifiée, de manière préférée dans une presse à cycle court.

14. Procédé de fabrication d'un matériau composite selon la revendication 11 comprenant les étapes suivantes :
- de fourniture d'au moins une strate de papier kraft ;
- de fourniture d'au moins une couche contenant de la résine de formaldéhyde, en particulier d'au moins une strate de papier contenant de la résine de formaldéhyde ;
- de fourniture d'au moins un film composé d'au moins un élastomère thermoplastique ; et
- de compression de la structure stratifiée.

15. Procédé selon la revendication 14, comprenant les étapes suivantes :
- de fourniture d'au moine une strate de papier transparent (strate de parchemin) ;
- de fourniture d'une strate de papier kraft ;
- de fourniture d'au moins une strate de papier contenant de la résine de formaldéhyde, en particulier une strate de papier décoratif contenant de la résine de formaldéhyde,
- de fourniture d'au moins un film composé d'au moins un élastomère thermoplastique ;
- de fabrication d'une stratification composée d'une strate de papier transparent, d'une strate de papier kraft, d'une strate de papier contenant de la résine et d'un film composé d'un élastomère thermoplastique ; et
- de compression de la stratification dans une presse à chaud, en particulier dans une presse à double bande.
